# EUROPÄISCHE PATENTSCHRIFT

(11) **EP 1 239 240 B1**
(45) Veröffentlichungstag und Bekanntmachung des Hinweises auf die Patenterteilung: **23.05.2007**
(21) Anmeldenummer: 02003622.4
(22) Anmeldetag: 16.02.2002
(51) Int. Cl.: F25B 35/04, F25B 17/08, B01D 53/04, B01J 20/18

(54) **Adsorber/Desorber für ein Zeolith-Heizgerät**
Adsorber/desorber for heating apparatus using zeolithe
Adsorbeur/désorbeur pour appareil de chauffage utilisant le zeolithe

(30) Priorität: 23.02.2001 AT 2882001
(43) Veröffentlichungstag der Anmeldung: 11.09.2002
(73) Patentinhaber: Vaillant GmbH, 42859 Remscheid (DE)
(72) Erfinder: Lang, Rainer, Dr., 51067 Köln (DE); Leyendecker, Markus, 51109 Köln (DE); Marth, Frank, 56581 Melsbach (DE); Marx, Uwe, 51375 Leverkusen (DE); Wienen, Johann, 46359 Heiden (DE); Dawoud, Belal, Dr., 52066 Aachen (DE); De Vries, Hartmut, 52477 Alsdorf (DE); Miltkau, Thorsten, 52066 Aachen (DE); Stricker, Marc, 35037 Marburg (DE)
(74) Vertreter: Hocker, Thomas

(56) Entgegenhaltungen:
- EP-A- 1 148 308
- DE-A- 10 024 793
- DE-A- 19 539 105
- DE-A- 19 730 697
- DE-A- 19 902 695
- FR-A- 2 593 588
- PATENT ABSTRACTS OF JAPAN vol. 1998, no. 10, 31. August 1998 (1998-08-31) & JP 10 141803 A (DENSO CORP), 29. Mai 1998 (1998-05-29)

## Beschreibung

Die Erfindung bezieht sich auf einen Adsorber/Desorber gemäß dem Oberbegriff des ersten unabhängigen Anspruches.

DE-A-199 02 695 offenbart einen Adsorber/Desorber gemäß dem Oberbegriff des Anspruches 1.

Derartige Adsorber/Desorber werden zumeist als Aluminium-Rippenrohre ausgeführt und mit Zeolith-Pellets gefüllt, daß die Pellets zwischen die Rippen gefüllt werden und so mit einem Aluminium-Maschendraht umhüllt werden, daß die Pellets nicht herausfallen können.

Bei einem solchen Adsorber/Desorber ergibt sich der Nachteil, daß das Befüllen sehr aufwendig und nicht prozeßsicher ist. Außerdem ist bei der Umhüllung mit einem Maschendraht stets die Gefahr gegeben, daß sich die Maschen aufweiten und die Pellets herausfallen.

Ziel der Erfindung ist es diese Nachteile zu vermeiden und einen Adsorber/Desorber der eingangs erwähnten Art vorzuschlagen, der sich einfach herstellen läßt und bei dem die Zeolith-Pellets sicher gehalten sind.

Erfindungsgemäß wird dies bei einem Adsorber/Desorber der eingangs erwähnten Art durch die kennzeichnenden Merkmale des ersten unabhängigen Anspruches erreicht.

Durch die vorgeschlagenen Maßnahmen ergibt sich ein sicherer Halt der Pellets. Außerdem ergibt sich ein sehr guter Wärmeaustausch mit dem im Rohr strömenden Fluid.

In dieser Hinsicht ist es besonders vorteilhaft die Merkmale des Anspruches 2 vorzusehen.

Dabei kann die Gestalt der Lamellen frei gewählt werden. So sind neben runden Lamellen z.B. auch dreieckige oder elliptische oder auch rechteckige Lamellen ohne weiteres möglich. Dabei können die Ränder auch abschnittsweise aufgebördelt werden, wobei die einzelnen Abschnitte durch Einschnitte voneinander getrennt sind.

Ein weiters Ziel der Erfindung ist es ein Verfahren zur Herstellung eines erfindungsgemäßen Adsorber/Desorbers vorzuschlagen, das eine einfache Herstellung ermöglicht.

Erfindungsgemäß wird dies durch die Merkmale des Anspruches 3 erreicht.

Durch die vorgeschlagenen Verfahrensschritte ist eine einfache Beladung der mit Lamellen bestückten Rohre möglich.

Die Erfindung wird nun anhand der Zeichnungen näher erläutert.

Dabei zeigen
Fig. 1 schematisch einen Schnitt durch eine erste Ausführungsform eines erfindungsgemäßen Adsorber/Desorbers,
Fig. 1a eine einzelne Lamelle,
Fig. 2 bis 4 verschiedene Ausführungsformen von Lamellen,
Fig. 5 einen Adsorber/Desorber, der nicht zu der Erfindung gehört,
Fig. 6 und 7 schematisch verschiedene Ausführungsformen von Adsorbern/Desorbern, die nicht zur Erfindung gehören.

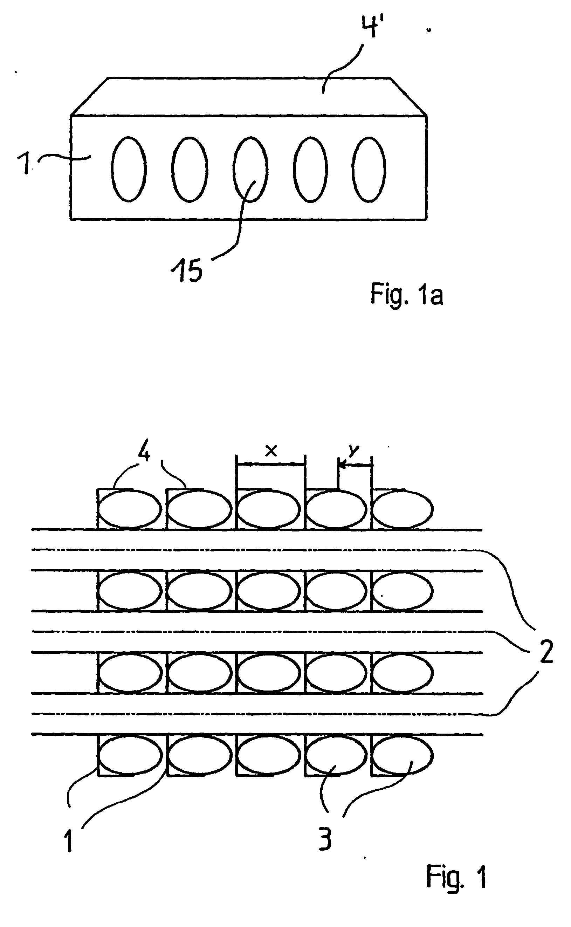

Bei der Ausführungsform nach der Fig. 1 sind Lamellen 1 auf mehrere parallel laufende Rohre 2 aufgezogen. Dabei weisen die Rohre 2 einen Abstand voneinander auf, der dem größten zulässigen Maß eines Pellets 3 entspricht.

Die Lamellen 1 weisen aufgebördelte Ränder 4 auf. Dabei weisen die Lamellen 1 einen Abstand X voneinander auf, der der größten zulässigen Größe der Pellets 3 entspricht. Dabei weisen die aufgebördelten Ränder 4 einen lichten Abstand Y von der benachbarten Lamelle 1 auf, der kleiner als die kleinste zulässige Größe der Pellets 3 ist.

Fig. 1 a zeigt eine einzelne Lamelle 1 mit noch nicht umgebördeltem Rand 4' und Durchzug 15 für die Rohre 2.

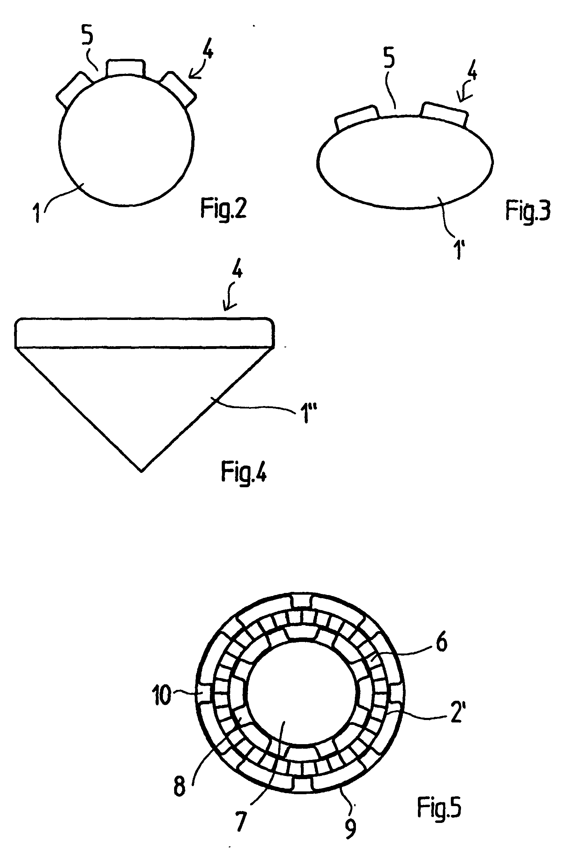

Wie aus den Fig. 2 bis 4 zu ersehen ist, können die Lamellen 1, 1', 1" verschiedene Gestalt aufweisen, wie z.B. rund, elliptisch oder dreieckig ausgebildet sein. Dabei können die aufgebördelten Ränder abschnittsweise ausgebildet sein, wobei die einzelnen Abschnitte durch Einschnitte 5 voneinander getrennt sind.

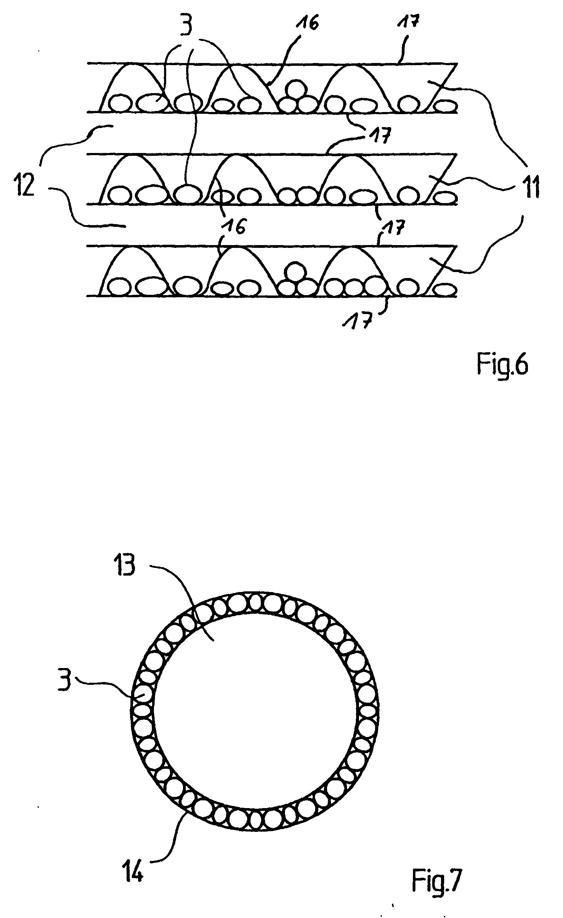

Bei der Ausführungsform nach der Fig. 5 ist ein Well- oder Glattrohr 2' mit einem ringförmigen Hohlraum 6 vorgesehen. Innerhalb dieses Rohres 2' ist ein Stützrohr eingeschoben, das mit radial nach außen abstehenden Abstandhaltern versehen ist. Weiters ist das Rohr 2' von einem Umhüllungsrohr 9 umgeben, das mit radial nach innen gerichteten Abstandhaltern 10 versehen ist, die an der Außenseite des Rohres 2' anliegen.

Dabei weisen die Abstandhalter 8 und 10 eine radiale Erstreckung auf, die der größten zulässigen Abmessung der Zeolith-Pellets 3 entsprechen, die in die zwischen dem Rohr 2', dessen ringförmiger Hohlraum von Wasser durchströmt ist, und dem Stütz- bzw. dem Umhüllungsrohr 7, 9 verbleibenden Räume gefüllt sind.

Bei der Ausführungsform nach der Fig. 6 sind Platten 11 mit wabenartiger Struktur vorgesehen, zwischen denen von Wasser durchströmbare Kanäle 12 verbleiben. Dabei sind in die Platten 11 Zeolith-Pellets 3, vorzugsweise einlagig eingebracht.

Bei der Ausführungsform nach der Fig. 7 ist ein Wellrohr 13 vorgesehen, das von Wasser durchströmt ist. In die zwischen den Rippen des Wellrohres 13 verbleibenden Räume sind Zeolith-Pellets 3 gehalten, wobei das Wellrohr 13 mit einer Umstrickung 14 versehen ist, die ein Herausfallen der Zeolith-Pellets 3 verhindert. Dabei ist an einer Stirnseite des Wellrohres 13 ein Sieb angebracht.

## Patentansprüche

1. Adsorber/Desorber für ein Zeolith-Heizgerät, bei dem mindestens ein von einem Fluid durchströmtes Rohr (2) vorgesehen ist, das von Zeolith-Pellets (3) umgeben ist, **dadurch gekennzeichnet, daß** auf dem mindestens einem Rohr (2) Lamellen (1) in einem Abstand X voneinander aufgebracht sind, der dem zulässigen größten Pellet (3) entspricht und diese Lamellen (1) im Bereich ihrer äußeren Ränder (4) aufgebördelt sind, wobei der Abstand Y zwischen den aufgebördelten Rändern (4) und der benachbarten Lamelle (1) kleiner als das nach der vorgegebenen Toleranz kleinste Pellet (3) ist.

2. Adsorber/Desorber nach Anspruch 1, **dadurch gekennzeichnet, daß** die Lamellen (1) von mehreren Rohren (2), die vorzugsweise einen ovalen Querschnitt aufweisen, durchsetzt sind.

3. Verfahren zur Herstellung eines Adsorber/Desorbers nach Anspruch 1 oder 2, **dadurch gekennzeichnet, daß** ebene Lamellen (1) auf das mindestens eine Rohr (2) aufgeschoben und die Pellets (3) in die Zwischenräume zwischen die ebenen Lamellen (1) eingebracht und anschließend deren Ränder (4) aufgebördelt werden, wobei die Lamellen in einem Abstand X von einander aufgebracht sind, der dem zulässigen größten Pellets entspricht, wobei der Abstand Y zwischen den aufgebördelten Rändern und der benarchbarten Lamelle kleiner als das nach den vorgegebenen Toleranz kleinste Pellet ist, wobei die ebenen Lamellen (1) vorzugsweise mit Schwächungsstellen versehen sind, die an Ansatzstellen der aufzubördelnden Ränder (4) angeordnet sind.

## Claims

1. An adsorber/desorber for a zeolite heater comprising at least one pipe (2) through which a fluid is passed and which is surrounded by zeolite pellets (3) **characterised in that** provision is made on such at least one pipe (2) for lamellae (1) spaced at a mutual distance X which corresponds to the maximum permissible pellet (3) and that these lamellae (1) are flanged in the area of their outer rims (4), with the distance Y between the flanged rims (4) and the neighbouring lamella (1) being smaller than the smallest pellet (3) defined by the specified tolerance limits.

2. An adsorber / desorber as claimed in Claim 1 **characterised in that** the lamellae (1) are interspersed with several pipes (2) of preferably oval cross-section.

3. A process for the manufacture of an adsorber / desorber as claimed in Claim 1 or 2 **characterised in that** straight lamellae (1) are pushed onto the at least one pipe (2) and pellets (3) are inserted into the spaces between the straight lamellae (1) and that subsequently the rims (4) thereof are flanged, with the lamellae being spaced from one another at a distance X corresponding to the maximum permissible pellet, with the distance Y between the flanged rims and the neighbouring lamella being smaller than the smallest pellet defined by the specified tolerance limits, and with the straight lamellae (1) being preferably provided with constrictions located at the points where the lamellae are to be flanged.

## Revendications

1. Adsorbant/désorbant pour un appareil de chauffage à zéolite, équipé d'au moins un tube (2) canalisant un fluide et entouré de boulettes de zéolite (3), **caractérisé par le fait que** ce seul tube (2) est muni de lamelles (1) placées à une distance X entre elles qui correspond à la boulette (3) la plus grande admise, et que les bords extérieurs (4) de ces lamelles (1) sont repliés, la distance Y entre les bords (4) repliés et la lamelle (1) voisine étant plus petite que la boulette (3) la plus petite suivant la tolérance prévue.

2. Adsorbant/désorbant suivant la revendication 1, **caractérisé par le fait que** les lamelles (1) sont traversées par plusieurs tubes (2) ayant, de préférence, un diamètre oval.

3. Procédé visant la réalisation d'un adsorbant/désorbant suivant la revendication 1 ou 2, **caractérisé par le fait que** des lamelles planes (1) sont glissées sur le tube (2) unique et que les boulettes (3) sont mises dans les espaces entre les lamelles planes (1) dont les bords (4) sont ensuite repliés, les lamelles étant placées à une distance X entre elles qui correspond à la plus grande boulette admise, la distance Y entre les bords repliés et la lamelle voisine étant plus petite que la boulette la plus petite suivant la tolérance préréglée, les lamelles (1) étant de préférence munies de points d'affaiblissement prévus à des points d'origine de bords (4) à replier.
